# EUROPÄISCHE PATENTSCHRIFT

(11) **EP 1 977 193 B1**
(45) Veröffentlichungstag und Bekanntmachung des Hinweises auf die Patenterteilung: **02.09.2015**
(21) Anmeldenummer: 05817911.0
(22) Anmeldetag: 16.12.2005
(51) Int. Cl.: G01D 3/028, B23K 26/04

(54) **ISOLATOR FÜR EINE SENSORANORDNUNG EINER LASERBEARBEITUNGSMASCHINE**
INSULATOR FOR A SENSOR ARRANGEMENT OF A LASER MACHINING TOOL
ISOLATEUR POUR SYSTEME DE CAPTEUR D'UNE MACHINE D'USINAGE AU LASER

(43) Veröffentlichungstag der Anmeldung: 08.10.2008
(73) Patentinhaber: TRUMPF Werkzeugmaschinen GmbH + Co. KG, 71254 Ditzingen (DE)
(72) Erfinder: WEICK, Jürgen-Michael, 71679 Asperg (DE); KLÜHSPIES, Tobias, 70825 Korntal-Münchingen (DE); BRAUN, Jens, 70839 Gerlingen (DE)
(74) Vertreter: Kohler Schmid Möbus Patentanwälte
(86) Internationale Anmeldenummer: PCT/EP2005/013560
(87) Internationale Veröffentlichungsnummer: WO 2007/073745

(56) Entgegenhaltungen:
- EP-A- 0 503 488
- DE-A1- 4 035 404
- DE-A1- 19 906 442
- JP-A- H09 277 080
- US-A1- 2002 070 198

## Beschreibung

Die vorliegende Erfindung betrifft eine Laserbearbeitungsmaschine mit einer Sensoranordnung nach dem Oberbegriff von Patentanspruch 1. Die DE 4 035 404 A1 offenbart eine solche Laserbearbeitungsmaschine.

Eine Sensoranordnung ist beispielsweise durch die DE 199 06 442 A1 bekannt geworden. Isolatoren sind Bestandteil von Sensoranordnungen und sind durch ihren Einsatz in handelsüblichen Laserbearbeitungsmaschinen bekannt geworden.

Bekannte Isolatoren bestehen aus Keramik, wie z.B. Al₂O₃, welches eine hohe Beständigkeit gegen Hitze und gegen Stöße aufweist, aber aufgrund seiner Härte nur schwer bearbeitet werden kann. Bei diesem Isolator ist der kapazitive Widerstand wichtiger als die Isolation gegenüber Gleichstrom. Deshalb muss der Isolationsabstand bei einem Isolator aus Al₂O₃ groß gewählt werden.

Der Isolator wird beim Schneiden von diffus zurückreflektierter Strahlung getroffen. Daher ist es weiterhin erforderlich, dass der Isolator aus einem Werkstoff besteht, welcher von der Rückstrahlung nicht zerstört oder beschädigt wird. Al₂O₃ hat für diesen Zweck ideale Eigenschaften, da es sehr beständig gegenüber Hitze und Stoss ist. Nachteilig an diesen Isolatoren ist jedoch, dass Al₂O₃ in der Herstellung aufwändig und teuer ist.

Gattungsgemäßer Stand der Technik ist offenbart in DE 40 35 404 A1. Diese Druckschrift betrifft eine Düse für ein Werkzeug zur Materialbearbeitung. In ihrem Inneren weist die vorbekannte Düse einen konischen Düsenkörper auf mit einem zu dem Werkstück hin gelegenen Spitzenbereich aus Messing sowie mit einem oberflächeneloxierten und folglich elektrisch nichtleitenden verbleibenden Bereich an der von dem Werkstück abliegenden Seite des Spitzenbereiches. Zu Befestigungszwecken wird der Düsenkörper von einem Klemmelement beaufschlagt. Dieses besitzt einen z. B. aus Stahl gefertigten Innenkörper sowie einen den Innenkörper umschließenden Außenkörper aus elektrisch isolierendem Material. Der Innenkörper des Klemmelementes stützt sich an dem verbleibenden Bereich des konischen Düsenkörpers an der von dem Spitzenbereich des konischen Düsenkörpers abliegenden Stirnseite ab. Der verbleibende Bereich des konischen Düsenkörpers ist gegenüber dem elektrisch isolierenden Außenkörper des Klemmelementes zu dem Werkstück hin versetzt. Der verbleibende Bereich des konischen Düsenkörpers und der Außenkörper des Klemmelementes sind Teile eines Isolators, mittels dessen eine werkstückseitige Düsenelektrode der vorbekannten Düse gegen die restliche Materialbearbeitungseinrichtung, in welche die Düse eingeschraubt wird, elektrisch isoliert ist.

Der Erfindung liegt die Aufgabe zugrunde, eine Laserbearbeitungsmaschine mit einer einfach und kostengünstig herzustellenden Sensoranordnung vorzuschlagen.

Diese Aufgabe wird erfindungsgemäß durch die Merkmale des Anspruchs 1 gelöst. Das äußere Isolatioristell besteht aus Kunststoff und dient zur elektrischen Isolation. Das innere Abschirmungstell besteht aus einem nichtleitenden und gegen Hitze beständigen Material wie z. B. Quarzglas und ist zur Abschirmung gegen die oben genannte Rückstrahlung vorgesehen. Das Abschirmungstell kann als Quarzglasrohr oder als Keramikhülse ausgebildet und in das Isolationsteil eingeklebt oder eingepresst sein.

Das Isolationsteil kann aus einem Kunststoff kostengünstig hergestellt und einfach gefertigt werden. Das Abschirmungsteil dient zur Abschirmung gegen die Laserstrahlung. Das Abschirmungsteil ist geeignet, höhere Laserleistungen ohne Aufschmelzung oder andere Schäden auszuhalten Die genaue Passung der Abschirmung kann durch Drehen des Kunststoffteils an Stelle eines zeitaufwändigen Schleifens der Keramik erfolgen. Auch der Brennvorgang der Keramik kann eingespart werden.

Das Abschirmungsteil kann vorzugsweise aus einem Quarzglasrohr bestehen. Quarz weist eine sehr hohe Thermoschockbeständigkeit auf und ist kostengünstig herzustellen. Alternativ dazu kann das Abschirmungsteil auch aus Keramik, z.B. aus Al₂O₃, bestehen.

Ein Ausführungsbeispiel der Erfindung ist in der Zeichnung schematisch dargestellt und wird nachfolgend mit Bezug zu den Figuren der Zeichnung näher erläutert. Es zeigt:
- **Figur 1**: eine Explosionsdarstellung einer Sensoranordnung einer Laserbearbeitungsmaschine;
- **Figur 2**: die Sensoranordnung im Längsschnitt;
- **Figur 3**: ein Blockschaltbild für eine Regelung mithilfe der Sensoranordnung.

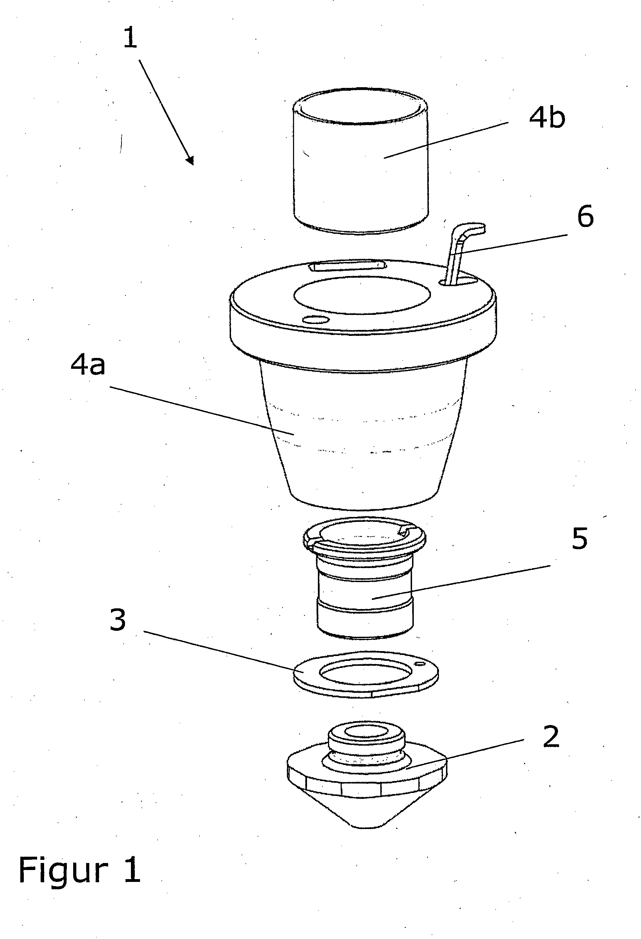

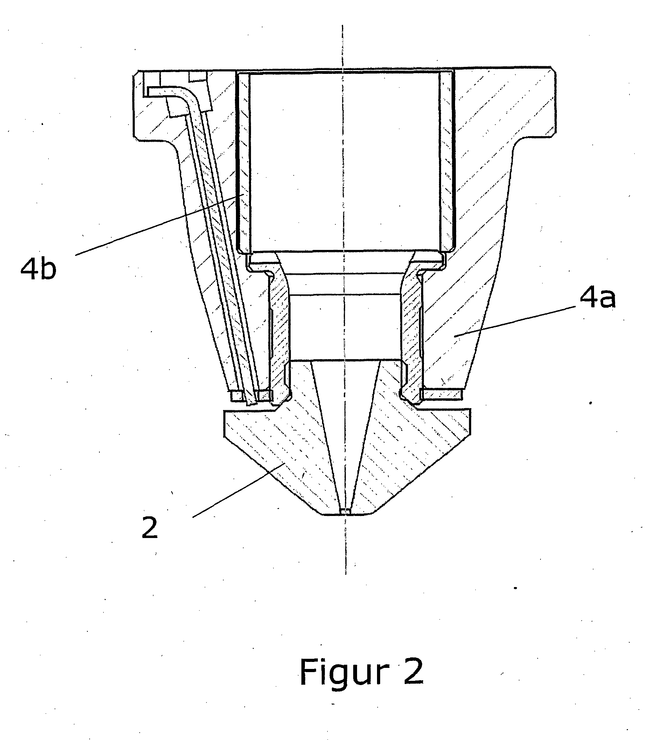

Aus den **Figuren 1** und **2** ist der Aufbau einer Sensoranordnung **1** einer Laserbearbeitungsmaschine ersichtlich, welche zum thermischen Schneiden von Werkstücken mittels Laserstrahlung geeignet ist. Die Sensoranordnung 1 umfasst im Wesentlichen eine Laserbearbeitungsdüse **2,** eine Kontaktscheibe **3,** eine Düsenaufnahme **5,** einen zweiteilig aufgebauten Isolator (ein Isolationsteil **4a** zur elektrischen Isolation und ein Abschirmungsteil **4b** zur Abschirmung gegen Strahlung und/oder Wärme) und einen Kontaktstift **6.** Die Düsenaufnahme 5 dient der Befestigung der Laserbearbeitungsdüse 2 an dem Isolationsteil 4a.

Die Erfindung besteht darin, den in der Sensoranordnung 1 eingesetzten zweiteiligen Isolator derart auszubilden, dass das innere Abschirmungsteil 4b an der Innenseite des äußeren Isolationsteils 4a angeordnet ist. Das äußere zur elektrischen Isolierung verwendete Teil 4a besteht aus einem geeigneten Kunststoff mit niedrigem kapazitivem Widerstand εᵣ und hoher Erweichungstemperatur. Der Streustrahlungsschutz auf der Innenseite des Teils 4a ist durch ein eingepresstes (oder eingeklebtes) Quarzglasrohr 4b ausgestaltet. An der Innenseite des Teils 4a ist eine Abschirmung als Strahlungsschild notwendig, welche das Teil 4a vor reflektierter Laserstrahlung bzw. vor einer zu starken, das Teil 4a zerstörenden Wärmestrahlung schützt.

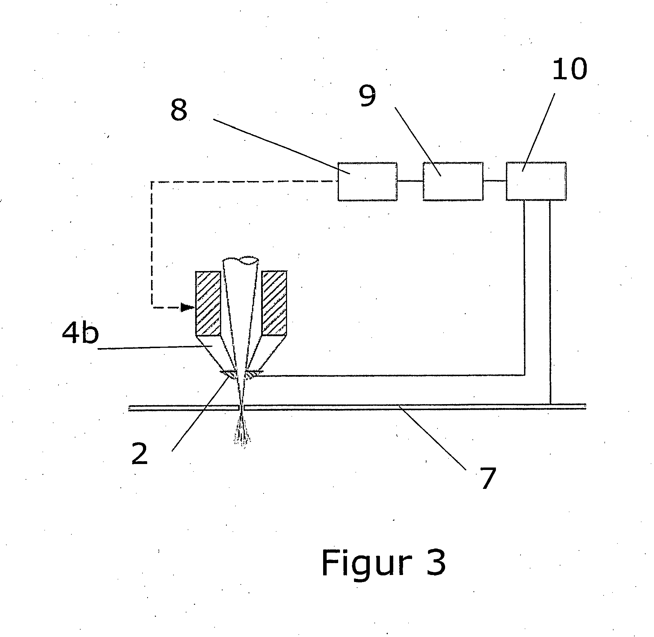

Das an sich bekannte und daher hier nicht näher beschriebene Messprinzip zur Abstandsregelung der Laserbearbeitungsdüse 2 bezüglich des Werkstücks basiert gemäß **Figur 3** auf der Messung der elektrischen Kapazität zwischen der Laserbearbeitungsdüse 2 und einem Werkstück **7.** Die Kapazität ist abstandsabhängig und verringert sich mit zunehmendem Abstand der Laserbearbeitungsdüse 2 zum Werkstück 7. Die Kapazitätsmessung erfolgt mithilfe einer Messeinrichtung **10** auf der Basis eines Schwingkreises, dessen Frequenz kapazitätsabhängig verstimmt wird. Der Zusammenhang zwischen dem Abstand und der Frequenz wird mithilfe einer in bestimmten Abständen ermittelten Kennlinie hergestellt. Das abstandsabhängige Signal wird von der Messeinrichtung 10 erfasst. Eine derartige Abstandsregelung ist beispielsweise durch die DE19906442 bekannt. Ein im Unterteil des Laserbearbeitungskopfs integrierter HF-Oszillator ändert seine Frequenz in Abhängigkeit vom Messabstand. Das Frequenzsignal wird zunächst an eine Auswerteeinheit **9** übertragen und digital ausgewertet. Dabei wird über eine vorab aufgenommene Kennlinie aus der Frequenz der Abstand ermittelt. Dadurch kann der Abstand der Laserbearbeitungsdüse 2 zum Werkstück 7 mithilfe der Steuereinrichtung **8** der Laserbearbeitungsmaschine konstant gehalten werden. Die Laserbearbeitungsdüse 2 kann der Kontur der Werkstückoberfläche nachfahren. Kollisionen zwischen Laserbearbeitungskopf und Werkstück 7 werden vermieden. Darüber hinaus kann mit der Abstandsregelung die Lage des Werkstücks 7 ermittelt werden, so dass nachträgliches Verschieben zum genauen Ausrichten entfällt.

### BEZUGSZEICHENLISTE

- 1: Sensoranordnung
- 2: Laserbearbeitungsdüse
- 3: Kontaktscheibe
- 4a: Isolationsteil
- 4b: Abschirmungsteil
- 5: Düsenaüfnahme
- 6: Kontaktstift
- 7: Werkstück
- 8: Steuereinrichtung
- 9: Auswerteeinheit
- 10: Messeinrichtung

## Patentansprüche

1. Laserbearbeitungsmaschine mit einer Sensoranordnung, die einen Isolator umfasst, der ein äußeres Isolationsteil (4a) aus Kunststoff zur elektrischen Abschirmung und ein inneres Abschirmungsteil (4b) aus einem nichtleitenden wärmebeständigen Werkstoff aufweist, **dadurch gekennzeichnet, dass** das äußere Isolationsteil (4a) mittels des inneren Abschlrmungstells (4b) gegen reflektierte Laserstrahlung und/oder Wärme abschirmbar ist, indem das innere Abschirmungsteil (4b) an der Innenseite des äußeren Isolationstells (4a) angeordnet ist.

2. Laserbearbeitungsmaschlne nach Anspruch 1, **dadurch gekennzeichnet, dass** das Abschirmungsteil (4b) aus Quarzglas besteht.

3. Laserbearbeitungsmaschine nach Anspruch 1, **dadurch gekennzeichnet, dass** das Abschirmungsteil (4b) aus einer Keramik besteht.

4. Laserbearbeitungsmaschine nach einem der vorhergehenden Ansprüche, **dadurch gekennzeichnet, dass** das Abschirmungsteil (4b) rohrförmig ausgebildet ist.

5. Laserbearbeitungsmaschine nach einem der vorhergehenden Ansprüche, **dadurch gekennzeichnet, dass** das Abschirmungsteil (4b) eingeklebt ist.

6. Laserbearbeitungsmaschine nach einem der vorhergehenden Ansprüche, **dadurch gekennzeichnet, dass** das Abschirmungsteil (4b) eingepresst ist.

## Claims

1. Laser processing machine with a sensor arrangement, comprising an insulator, in turn comprising an outer insulation part (4a) made of plastic for electrical shielding, and an inner shielding part (4b) made of a non-conductive heat-resistant material, **characterised in that** the outer insulation part (4a) can be shielded against reflected laser radiation and/or heat by means of the inner shielding part (4b) **in that** the inner shielding part (4b) is arranged on the inside of the outer insulation part (4a).

2. Laser processing machine according to claim 1, **characterised in that** the shielding part (4b) consists of quartz glass.

3. Laser processing machine according to claim 1, **characterised in that** the shielding part (4b) consists of ceramic.

4. Laser processing machine according to one of the preceding claims, **characterised in that** the shielding part (4b) is of a tubular design.

5. Laser processing machine according to one of the preceding claims, **characterised in that** the shielding part (4b) is pasted in.

6. Laser processing machine according to one of the preceding claims, **characterised in that** the shielding part (4b) is pressed in.

## Revendications

1. Machine d'usinage par laser comportant un dispositif capteur qui comprend un isolateur qui présente une pièce isolante extérieure (4a) en matière plastique pour le blindage électrique et une pièce de blindage intérieure (4b) dans un matériau non conducteur résistant à la chaleur, **caractérisée en ce que** la pièce isolante extérieure (4a) peut être protégée contre le rayonnement laser réfléchi et/ou la chaleur par la pièce de blindage intérieure (4b) du fait que la pièce de blindage intérieure (4b) est disposée sur le côté intérieur de la pièce isolante extérieure (4a).

2. Machine d'usinage par laser selon la revendication 1, **caractérisée en ce que** la pièce de blindage (4b) est constituée de verre de quartz.

3. Machine d'usinage par laser selon la revendication 1, **caractérisée en ce que** la pièce de blindage (4b) est constituée d'une céramique.

4. Machine d'usinage par laser selon l'une des revendications précédentes, **caractérisée en ce que** la pièce de blindage (4b) est réalisée en forme de tube.

5. Machine d'usinage par laser selon l'une des revendications précédentes, **caractérisée en ce que** la pièce de blindage (4b) est collée.

6. Machine d'usinage par laser selon l'une des revendications précédentes, **caractérisée en ce que** la pièce de blindage (4b) est emmanchée.
